# EUROPEAN PATENT APPLICATION

(11) **EP 1 983 192 A1**
(43) Date of publication of application: **22.10.2008**
(21) Application number: 07707432.6
(22) Date of filing: 25.01.2007
(51) Int. Cl.: F04B 39/00, F04C 29/00

(54) **METHOD FOR MANUFACTURING SLIDING COMPONENT OF COMPRESSOR AND COMPRESSOR**

(30) Priority: 26.01.2006 JP 2006017626; 17.02.2006 JP 2006041216
(71) Applicant: DAIKIN INDUSTRIES, LTD., Osaka-shi, Osaka 530-8323 (JP)
(72) Inventor: YAMAJI, Hiroyuki, Sakai-shi Osaka 592-8331 (JP); KAJIWARA, Mikio, Sakai-shi Osaka 592-8331 (JP); ARAI, Mie, Sakai-shi Osaka 592-8342 (JP); KISHIKAWA, Mitsuhiko, Sakai-shi Osaka 592-8331 (JP); HIROUCHI, Takashi, Sakai-shi Osaka 592-8331 (JP)
(74) Representative: Goddar, Heinz J.
(86) International application number: PCT/JP2007/051200
(87) International publication number: WO 2007/086479

(57) **Abstract**

An object of the present invention is to provide a method for manufacturing a compressor slider that can be used to manufacture a compressor slider at lower cost than a method for manufacturing a compressor slider in which "a slider preform for a compressor is manufactured by thixocasting, and the slider preform is machine finished with ultrafine precision to obtain the final slider." The method for manufacturing a compressor slider has a slider preform manufacturing step, a resin coating step, and a machining step. In the slider preform manufacturing step, an iron slider preform (25) in which at least one property selected from the tensile strength and the tensile modulus of elasticity is greater than that of flake graphite cast iron is manufactured using a prescribed mold. In the resin coating step, the slider preform is not machined, but the resin coating layer (25a) is formed on all or a part of the slider preform. In the machining step, only the resin coating layer is machined, and a completed slider (17, 23, 24, 26, 39, 60) is obtained.

## Description

### TECHNICAL FIELD

The present invention relates to a method for manufacturing a compressor slider and to a compressor that incorporates the slider manufactured by this method.

### BACKGROUND ART

A method for manufacturing a compressor slider has been proposed (e.g., see Patent Document 1) in which "a slider preform for a compressor is manufactured by thixocasting, and the slider preform is machine finished with ultrafine precision to obtain the final slider." It is believed that adopting this manufacturing method allows raw material costs, machining costs, and tool wear costs to be reduced in comparison with adopting sand mold casting, and grinding waste, machining waste fluid, and other waste products to be reduced.
<Patent Document 1> Japanese Laid-open Patent Application No. 2005-36693.

### DISCLOSURE OF THE INVENTION

### <Problems that the Invention is to Solve>

However, a further reduction in the cost of manufacturing compressor sliders is currently needed.

An object of the present invention is to provide a method for manufacturing a compressor slider that allows the compressor slider to be manufactured at a lower cost than a method for manufacturing a compressor slider in which "a slider preform for a compressor is manufactured by thixocasting, and the slider preform is machine finished with ultrafine precision to obtain the final slider."

### <Means of Solving the Problems>

The method for manufacturing a compressor slider according to a first aspect has with a slider preform manufacturing step, a resin coating step, and a machining step. In the slider preform manufacturing step, an iron slider preform in which at least one property selected from a tensile strength and a tensile modulus of elasticity is greater than that of flake graphite cast iron is manufactured using a prescribed mold. The slider preform preferably has a tensile strength of 600 MPa or higher. The tooth thickness of a movable scroll or fixed scroll can be considerably reduced. Therefore, the scroll diameter of the movable scroll and the fixed scroll can be reduced even if a resin coating layer is provided. As a result, a compressor can be manufactured in which the gas compression load acting in the axial direction is reduced and the thrust bearing loss is reduced when scrolls having the same capacity are fabricated. In addition, the movable scroll can be made small and lightweight when this invention is applied to a movable scroll in a compressor with inverter circuit (variable speed control circuit) as a capacity control mechanism. Therefore, the centrifugal effect can be reduced and a structure suitable for high-speed operation can be obtained. The stress applied to a scroll portion is greater than during normal operation (during full load) when the capacity is controlled during high-compression ratio operation, even in a compressor with a capacity controller based on an unloader piston, but since strength is improved and toughness is enhanced, the possibility that the scroll portion will be damaged or the like can be reduced. Furthermore, in the method for manufacturing a compressor slider, the tooth height can be increased maintaining the same outside diameter size to increase the suction capacity. Therefore, the capacity of the compressor can be increased in this method for manufacturing a compressor slider. Improving fatigue strength is important in actual service life design, and when the tensile strength is improved, the fatigue strength is also similarly improved. Accordingly, the teeth of the scroll portion can be thinly designed without concern. In the resin coating step, a resin coating layer can be disposed partially or completely on the slider preform without machining all or a part of the slider preform. In this case, the resin coating is provided so that the thickness is equal to or greater than a value obtained by adding the machining tolerance to the profile precision of the slider member. In the machining step, only the resin coating layer is machined to obtain a completed slider. As used herein, the phrase "compressor slider" refers to, e.g., a movable scroll (in particular, a base portion, a scroll wrap portion, a bearing portion, and the like), a fixed scroll (in particular, a base portion, a scroll wrap portion, and the like), a bearing, a rotating shaft, a rotation-preventing member, or a slide bush (slide block). Also, "machining" refers to, e.g., cutting or the like.

In the method for manufacturing a compressor slider, an iron slider preform in which at least one property selected from a tensile strength and a tensile modulus of elasticity is greater than that of flake graphite cast iron is manufactured using a prescribed mold in the slider preform manufacturing step. Next, in the resin coating step, a resin coating layer is partially or completely formed on the slider preform without machining all or a part of the slider preform. In the machining step, only the resin coating layer is machined to obtain a completed slider. Accordingly, in the method for manufacturing a compressor slider, a high-hardness slider preform manufactured by thixocasting can be manufactured by machine finishing in a shorter amount of time than ultrafine precision finishing. Therefore, machining costs can be reduced by adopting this method for manufacturing a compressor slider. Also, since the sliding member is provided with high strength and improved sliding properties, the member is behaves particularly effectively with respect to high-pressure refrigerant, e.g., carbon dioxide. In the method for manufacturing a compressor slider, the iron slider preform itself is not machined. Rather, the resin having a lesser hardness is machined. Accordingly, tool wear costs can be reduced by adopting this method for manufacturing a compressor slider. As a result of adopting this method for manufacturing a compressor slider, a compressor slider can be manufactured at lower cost than the method for manufacturing a compressor slider in which "a compressor slider is manufactured by thixocasting, and the slider preform is finished by ultrafine finishing to obtain the final slider." Also, in this method for manufacturing a compressor slider, only the resin portion having a low hardness is finished, rather than the slider preform having a high hardness manufactured by thixocasting being finished. Accordingly, the finishing precision (in particular, shape precision typified by profile precision) can be improved by adopting this method for manufacturing a compressor slider. Therefore, when the slider is a movable scroll or a fixed scroll, the gap formed when the movable scroll and the fixed scroll mesh together can be set to be small. Therefore, gas refrigerant leakage is reduced by adopting this method for manufacturing a compressor slider, and, as a result, a compression step that is more efficient than conventional compression can be achieved. Furthermore, since resin has greater elasticity than metal, impact due to contact can be reduced when there is contact between sliders, and noise can be reduced.

The slider preform according to the present invention has shape precision (profile precision in the scroll portion of the movable and fixed scrolls) that is considerably higher than does a slider preform composed of FC material. For example, the shape precision is about 1 mm when the slider preform is composed of FC material, and the shape precision is 0.1 to 0.3 mm when the slider preform is composed of thixotropic material. Accordingly, the thickness of the resin coating layer must be 1 mm or greater when the slider preform is composed of FC material, and it is essentially impossible to form a resin coating layer on the slider preform.

Since the tensile strength of the slider preform according to the present invention is high, the thickness of the movable and fixed scrolls can be reduced, additionally, the thickness of the resin coating layer can be reduced, for example. For this reason, a resin coating can be used without increasing the size of the scroll portion by using this method for manufacturing a slider. Using these characteristics to reduce the diameter of the movable and fixed scrolls makes it possible to obtain an effect of higher efficiency through reduced thrust loss. By further using these characteristics to increase the thickness of the teeth of the scroll portion of the movable and fixed scrolls while maintaining the same size in terms of the external diameter makes it possible to obtain a compressor having a higher capacity.

Also, a compressor that incorporates a slider manufactured using the manufacturing method according to the present invention more readily demonstrates its effect when used as a low-temperature compressor, or as a compressor in which the operating pressure difference and the compression ratio tend to increase, as does the load produced by internal compression pressure, such as when R410A or CO2 is used as the refrigerant. Furthermore, the inlet gas temperature and inlet pressure are low and the inlet gas density is diluted in a low-temperature compressor, and the compressor capacity must therefore be increased in order to provide sufficient refrigerating capacity. The method is effective in such cases as well.

The teeth of the movable and fixed scrolls must unavoidably be made excessively thick because the strength is insufficient and the shape precision of the material is poor when a resin coating layer is formed on a slider preform composed of flake graphite cast iron. Accordingly, the scroll portion becomes very large when an attempt is made to fabricate a scroll portion having the same capacity from flake graphite cast iron, and it is realistically impossible to manufacture such a movable scroll and fixed scroll.

The method for manufacturing a compressor slider according to a second aspect is the method for manufacturing a compressor slider according to the first aspect, wherein the slider preform is manufactured by thixocasting (semi-molten molding) or rheocasting (semisolid molding) in the slider preform manufacturing step. As used herein, the term "rheocasting" refers to a method in which iron material is completely melted, the temperature of the material is then reduced, and molding is performed by pressing the material into a mold while applying pressure to the material when it has entered a semi-solid state. Also, when the slider preform is manufactured by thixocasting or rheocasting, the surface and interior of the slider preform tends to develop defects due to the inclusion of air and oxide scale on the surface of the billets. In order to prevent such defects, a hot water port and a hot water reservoir must be provided in addition to the slider preform, and the slider preform can be formed to a desired shape by removing portion other than the slider preform by cutting, sectioning, or using another method. Since the removed portion can be melted and reformed into billets, substantially no waste material is produced.

In this method for manufacturing a compressor slider, a slider preform is manufactured by thixocasting or by rheocasting in the slider preform manufacturing step. Accordingly, in this method for manufacturing a compressor slider, a slider preform can be manufactured with greater precision (near-net shaping is made possible) than conventional sand mold casting. The slider preform composed of semi-molten molded cast iron manufactured by thixocasting or rheocasting has a lower carbon content than does flake graphite cast iron. Since the tensile modulus of elasticity is improved together with a reduction in the carbon content of an iron-based material, the slider preform has a higher tensile modulus of elasticity than does flake graphite cast iron. Also, the precipitated graphite has a granular shape approximate to a spheroidal shape because, in molding by thixocasting or rheocasting, a metal structure is obtained by rapidly cooling and chilling the entire material, and then performing a graphitizing heat treatment to obtain precipitated graphite. Iron improves tensile strength and the tensile modulus of elasticity when the spheroidization ratio of the precipitant is increased. Accordingly, semi-molten (or semi-solid) molded cast iron in which precipitated graphite will take a granular shape having a higher spheroidization ratio than flake graphite cast iron generally has a higher tensile strength and tensile modulus of elasticity than does flake graphite cast iron. A slider preform manufactured by thixocasting or rheocasting has better machinability than does FCD while having the ductility and rigidity of FCD, the strength inside the slider preform is only slightly nonuniform, the strength and hardness can be easily adjusted by modifying the heat treatment method, and the material has a very fine metal structure as well as other characteristics. In the method for manufacturing a compressor slider, the slider preform is composed of a semi-molten molded cast iron manufactured by thixocasting, or a semi-solid molded cast iron manufactured by rheocasting. Accordingly, this method for manufacturing a compressor slider makes it possible to substantially reliably obtain an iron slider preform in which at least one property selected from the tensile strength and the tensile modulus of elasticity is higher than that of flake graphite cast iron. Also, the machinability of a slider preform manufactured by thixocasting or rheocasting worsens as the hardness increases. For this reason, the machinability of the slider preform can be adjusted by heat treatment when the slider preform must be machined. Also, a slider preform manufactured by thixocasting or rheocasting has excellent ductility and rigidity. Accordingly, when the slider is a movable scroll or a fixed scroll, the wrap of the movable and fixed scrolls is less liable to crack even when, e.g., liquid refrigerant has been suctioned in from the suction tube during operation of the compressor and pressure has suddenly increased. Even if the wrap were to become cracked or otherwise damaged, the wrap does not disintegrate into small pieces. Therefore, a situation that a large number of pieces flow into the refrigerant circuit can be prevented. As a result, a better compressor can be manufactured than when a conventional material is used, even for compressors that are mounted in products used in existing piping in order to shorten the construction time and to reduce costs in response to a demand for air conditioning upgrades.

The method for manufacturing a compressor slider according to a third aspect is the method for manufacturing a compressor slider according to the first aspect, wherein the slider preform is composed of any of pearlitic malleable cast iron, spheroidal graphite cast iron, and spheroidal carbide cast iron in the slider preform manufacturing step. It is preferred that the spheroidal carbide cast iron be spheroidal vanadium carbide cast iron. In an iron-based material, the tensile modulus of elasticity is improved as the carbon content is reduced. For this reason, pearlitic malleable cast iron in which the carbon content is less than that of flake graphite cast iron has a tensile modulus of elasticity that is higher than that of flake graphite cast iron. Also, precipitated graphite has a granular shape approximate to a spheroidal shape that has a higher spheroidization ratio than that of flake graphite cast iron. This is because, in the process of molding a pearlitic malleable cast iron, a metal structure is obtained by rapidly cooling and chilling the entire material, and then performing a graphitizing heat treatment to obtain precipitated graphite. Iron improves tensile strength and the tensile modulus of elasticity when the spheroidization ratio of the precipitant is increased. Therefore, pearlitic malleable cast iron generally has a higher tensile strength and tensile modulus of elasticity than does flake graphite cast iron. Pearlitic malleable cast iron has better machinability than does FCD while having the ductility and rigidity of FCD, can be easily adjusted for strength and hardness by modifying the heat treatment method in the same manner as a slider preform manufactured by thixocasting, and has other characteristics. In the molding process of spheroidal graphite cast iron, magnesium or another element as a graphite spheroidizing material to obtain precipitated graphite. Therefore, the precipitated graphite has a spheroidal shape in which the spheroidization ratio is greater than that of flake graphite cast iron. Iron improves tensile strength and the tensile modulus of elasticity, when the spheroidization ratio of the precipitant is increased. Therefore, the tensile strength and the tensile modulus of elasticity of spheroidal graphite cast iron are generally greater than those of flake graphite cast iron.

In this method for manufacturing a compressor slider, the slider preform is composed of any of pearlitic malleable cast iron, spheroidal graphite cast iron, and spheroidal carbide cast iron in the slider preform manufacturing step. Accordingly, this method for manufacturing a compressor slider makes it possible to substantially reliably obtain an iron slider preform in which at least one property selected from the tensile strength and the tensile modulus of elasticity is higher than that of flake graphite cast iron. However, the machinability of spheroidal carbide cast iron is inferior to that of flake graphite cast iron. Therefore, when the slider preform is made from spheroidal carbide cast iron in this manner, it is preferred that the machined locations of the slider preform except the hot fluid port, the hot fluid reservoir, and the like are eliminated, and the entire surface of the slider preform be coated with a resin.

The method for manufacturing a compressor slider according to a fourth aspect is the method for manufacturing a compressor slider according to the third aspect, wherein the slider preform is manufactured by a lost-wax process or casting in the slider preform manufacturing step.

In this method for manufacturing a compressor slider, the slider preform is manufactured by a lost-wax process or casting in the slider preform manufacturing step. Accordingly, this method for manufacturing a compressor slider makes it possible to manufacture a slider with greater precision (near-net shaping is made possible) than conventional sand mold casting. It is possible to substantially reliably obtain an iron slider preform in which at least one property selected from the tensile strength and the tensile modulus of elasticity is higher than that of flake graphite cast iron.

The method for manufacturing a compressor slider according to a fifth aspect is the method for manufacturing a compressor slider according to any of the first through fourth aspects, and further comprises a surface treatment step. In the surface treatment step, the surface of the slider preform is roughened. The surface treatment step is performed after the slider preform manufacturing step and prior to the resin coating step. Also, in the surface treatment step, it is preferred that the slider preform be surface treated so that the surface roughness (Rz) of the slider preform is 5 to 50 µm. When the surface roughness (Rz) is less than 5 µm, sufficient anchoring effect cannot be obtained, and when the surface roughness (Rz) is greater than 50 µm, a greater amount of resin is required and material costs are liable to be wasted without obtaining a greater effect by the greater roughness. Also, when the surface roughness (Rz) is greater than 50 µm, there are drawbacks in that the effective thickness of the slider preform is reduced, the strength of the slider preform is reduced as well, large notches are more readily formed in the surface of the slider preform, the slider preform is more readily broken when stress is applied to the notches, and other drawbacks occur. When the slider preform is the preform of a scroll member, the possibility that the slider preform will break is increased when several notches are formed in stressed areas, in the base of the scroll portion in particular, and in other areas.

In this method for manufacturing a compressor slider, the surface of the slider preform is roughened in the surface treatment step. For this reason, with this method for manufacturing a compressor slider, the adhesion between the slider preform and the resin coating layer can be improved by an anchoring effect or the like.

The method for manufacturing a compressor slider according to a sixth aspect is the method for manufacturing a compressor slider according to the fifth aspect, wherein the surface of the slider preform is roughened by chemical conversion treatment or blast treatment in the surface treatment step.

In this method for manufacturing a compressor slider, the surface of the slider preform is roughened by chemical conversion treatment or blast treatment in the surface treatment step. For this reason, the surface of the slider preform can be easily roughened with this method for manufacturing a compressor slider.

The method for manufacturing a compressor slider according to a seventh aspect is the method for manufacturing a compressor slider according to any of the first through sixth aspects, wherein a resin coating layer is formed on the slider preform by spray coating or injection molding in the resin coating step.

In the method for manufacturing a compressor slider, a resin coating layer is formed on the slider preform by spray coating or injection molding in the resin coating step. Accordingly, a resin coating layer can be easily formed on the slider preform with this method for manufacturing a compressor slider.

The method for manufacturing a compressor slider according to an eighth aspect is the method for manufacturing a compressor slider according to the seventh aspect, wherein a resin coating layer is formed on the slider preform by spray coating while the slider preform is heated and rotated in the resin coating step. In the case that the slider preform has a complex shape such as a movable scroll or a fixed scroll, it is preferred that coating is carried out while the coating gun is tilted. In this manner, the thickness of the resin coating layer can be made uniform even if the slider preform has a complex shape. In the case that the slider preform is a movable scroll, a fixed scroll, or the like, a uniform resin coating layer can also be formed on the base portion of the wrap.

In this method for manufacturing a compressor slider, a resin coating layer is formed on the slider preform by spray coating while the slider preform is heated and rotated in the resin coating step. Accordingly, in this method for manufacturing a compressor slider, quality can be easily maintained even if the resin coating layer is applied in an overlapping manner. Therefore, a thick resin coating layer can be easily formed in this method for manufacturing a compressor slider.

The method for manufacturing a compressor slider according to a ninth aspect is the method for manufacturing a compressor slider according to any of the first through eighth aspects, wherein the resin coating layer is formed on the slider preform so that the thickness of the resin coating layer is a value obtained by adding the machining allowance to the profile precision of the slider preform in the resin coating step.

In this method for manufacturing a compressor slider, the resin coating layer is formed on the slider preform so that the thickness of the resin coating layer is a value obtained by adding the machining allowance to the profile precision of the slider preform in the resin coating step. Accordingly, only the resin coating layer can be substantially reliably machined with this method for manufacturing a compressor slider.

The method for manufacturing a compressor slider according to a tenth aspect is the method for manufacturing a compressor slider according to any of the first through ninth aspects, wherein the resin coating layer is composed of an engineering plastic. As used herein, the term "engineering plastic" includes, e.g., polyamide resin, polyimide resin, polyamide imide resin, polyether imide resin, polyether nitrile resin, polyether sulfone resin, polycarbonate resin, polyacetal resin, modified polyphenylene ether resin, polybutylene terephthalate resin, reinforced polyethylene terephthalate resin, fluororesin, polyphenylene sulfide resin, polyallylate resin, polysulfone resin, polyether ketone resin, polyether ether ketone resin, liquid crystal polymer, phenol resin, melamine resin, urea resin, silicone resin, and epoxy resin. As used herein, "fluororesin" includes, e.g., polytetrafluoroethylene (polytetrafluoroethylene: PTFE), tetrafluoroethylene/perfluoroalkyl vinyl ether copolymer (PFA), tetrafluoroethylene/hexafluoropropylene copolymer (FEP), tetrafluoroethylene/ethylene copolymer (ETFE), polyvinylidene fluoride (PVDF), and polychlorotrifluoroethylene (PCTFE). However, these engineering plastics may be suitably selected in accordance with the type of refrigerant (fluorocarbon-based refrigerant, ammonia, carbon dioxide, water, air, hydrocarbon-based refrigerant) charged in the compressor.

In this method for manufacturing a compressor slider, engineering plastic is used to form a resin coating layer. Accordingly, the reliability of the slider can be maintained with this method for manufacturing a compressor slider even when the slider is exposed to high temperatures. Good sliding properties can be imparted to the slider when the engineering plastic is a fluororesin, a polyether ether ketone resin, and polyphenylene sulfide.

The method for manufacturing a compressor slider according to an eleventh aspect is the method for manufacturing a compressor slider according to any of the first through tenth aspects, wherein the resin coating layer has a hardness of 0.1 GPa or greater as measured by nanoindentation. The surface hardness of the resin is ordinarily less than that of metal and the resin is easily machined, but when the surface hardness is less than 0.1 GPa, the resin is excessively soft and conversely becomes difficult to machine. As used herein, the term "nanoindentation" refers to, e.g., the surface hardness measurement of a substance described on page 74 of Kobe Steel Engineering Reports, Vol. 52, No. 2 (Sept. 2002), and more specifically refers to a method in which a diamond chip indenter whose distal end is shaped as an elongated triangular pyramid (Berkovich-type) is pressed against the surface of a thin film or a material, and the surface hardness of the substance is calculated from the load applied to the indenter at that time and the projected surface area under the indenter. Nanoindentation is described in detail in the technical reference of the Japanese Patent Office website (http://www.jpo.go.jp/shiryou/s_sonota/hyoujun_gijutsu/spm/4_d_3_a.htm).

In this method for manufacturing a compressor slider, the resin coating layer has a surface hardness of 0.1 GPa or greater as measured by nanoindentation. For this reason, the resin coating layer can be easily machined, and the finishing precision can be improved with this method for manufacturing a compressor slider.

The method for manufacturing a compressor slider according to a twelfth aspect is the method for manufacturing a compressor slider according to any of the first through eleventh aspects, wherein the slider preform has a flat plate portion and a thin scroll portion. The thin scroll portion extends from a first plate surface, which is a plate surface on one side of the flat plate portion, toward a direction perpendicular to the first plate surface while a thin scroll shape is maintained. It is preferred that the ratio (H/T of the scroll) of the distance from the first plate surface of the thin scroll portion to the protruding end surface to the thickness of the thin scroll portion be 10 or greater and more preferably 15 or greater, from the viewpoint of improving efficiency, increasing capacity, and reducing size. In such a case, the diameter of the compressor can be reduced while compression capacity is maintained. Therefore, the thrust loss and outside diameter of the compressor can be reduced. Also, in such a case, the capacity of a compressor can be increased while the outside diameter of the movable and fixed scrolls is maintained. It is also preferred that the thickness of the flat plate portion be 10 mm or less. In the case that the preform of the movable and fixed scrolls is manufactured by thixocasting, a hot fluid port is ordinarily provided to the corresponding location in the flat plate portion of a mold. In such a case, when the flat plate portion is excessively thick, pinholes are readily generated due to solidification and contraction in the flat plate portion in the slider preform manufacturing step. However, when the thickness of the flat plate portion is 10 mm or less, the generation of pinholes due to solidification and contraction in the flat plate portion can be effectively prevented in the slider preform manufacturing step. Also, it is preferred that the ratio of the thickness of the thin scroll portion to the thickness of the flat plate portion be 0.2 or greater and 0.6 or less. When the ratio is less than 0.2, the strength of the thin scroll portion is liable to be insufficient. When the ratio is greater than 0.6, the possibility increases that air will be included in the slider preform manufacturing step and defects will be generated in the slider preform.

In this method for manufacturing a compressor slider, the slider preform has a flat plate portion and a thin scroll portion. Accordingly, a movable scroll or a fixed scroll can be manufactured with this method for manufacturing a compressor slider.

The method for manufacturing a compressor slider according to a thirteenth aspect is the method for manufacturing a compressor slider according to the twelfth aspect, wherein a resin coating layer is formed only on the first plate surface and the thin scroll portion in the resin coating step.

In the method for manufacturing a compressor slider, a resin coating layer is formed only on the first plate surface and the thin scroll portion in the resin coating step. Accordingly, with this method for manufacturing a compressor slider, it is possible to improve the finishing precision of the thin scroll portion alone.

The method for manufacturing a compressor slider according to a fourteenth aspect is the method for manufacturing a compressor slider according to the twelfth aspect, wherein a resin coating layer is formed only on a curved surface that intersects the first plate surface in the thin scroll portion in the resin coating step.

In the method for manufacturing a compressor slider, a resin coating layer is formed only on a curved surface that intersects the first plate surface in the thin scroll portion in the resin coating step. Accordingly, with this method for manufacturing a compressor slider, it is possible to improve the finishing precision of the lateral surface of the thin scroll portion alone.

The method for manufacturing a compressor slider according to a fifteenth aspect is the method for manufacturing a compressor slider according to the twelfth aspect, wherein the slider preform further comprises a groove portion. The groove portion is provided to the flat plate portion. As used herein, the term "groove" refers to an Oldham key groove or the like of a movable scroll. In the resin coating step, a resin coating layer is formed on at least the groove portion.

In this method for manufacturing a compressor slider, a resin coating layer is formed on at least the groove portion in the resin coating step. Accordingly, with this method for manufacturing a compressor slider, the sliding properties of the groove portion can be improved.

The method for manufacturing a compressor slider according to a sixteenth aspect is the method for manufacturing a compressor slider according to the twelfth aspect, wherein the slider preform further comprises a cylindrical portion. The cylindrical portion cylindrically extends from a second plate surface, which is a plate surface on the reverse side of the first plate surface, toward the direction perpendicular to the second plate portion. As used herein, the term "cylindrical" refers to a bearing portion or the like of a movable scroll. In the resin coating step, a resin coating layer is formed on at least the inner surface of at least the cylindrical portion. It is preferred that the thickness of the flat plate portion be 10 mm or less. In the case that the preform of the movable scroll and the fixed scroll is manufactured by thixocasting, a hot fluid port is ordinarily provided in a corresponding location to the flat plate portion of the mold. In such a case, when the flat plate portion is excessively thick, pinholes are readily generated due to solidification and contraction in the flat plate portion in the slider preform manufacturing step. However, when the thickness of the flat plate portion is 10 mm or less, the generation of pinholes due to solidification and contraction in the flat plate portion can be effectively prevented in the slider preform manufacturing step. Also, it is preferred that the ratio of the thickness of the cylindrical portion to the thickness of the flat plate portion be 0.3 or greater and less than 1.0. When the ratio is less than 0.3, the strength of the cylindrical portion is liable to be insufficient. When the ratio is 1.0 or higher, the possibility increases that air will be included in the slider preform manufacturing step and defects will be generated in the slider preform.

In this method for manufacturing a compressor slider, a resin coating layer is formed on at least the inner surface of the cylindrical portion in the resin coating step. Accordingly, with this method for manufacturing a compressor slider, the sliding properties of the inner surface of the cylindrical portion can be improved. In the particular case in which a fluororesin is used, journal bearing loss can be reduced due to the characteristic of a low coefficient of friction.

The method for manufacturing a compressor slider according to a seventeenth aspect is the method for manufacturing a compressor slider according to any of the twelfth aspect to sixteenth aspects, wherein the thin scroll portion has a tooth section that presents a trapezoidal shape when the tooth is cut along a plane that includes the centerline and is orthogonal to the first plate surface. It is preferred that the angle formed by the bottom and sloped sides of the trapezoid, i.e., the punching angle, be 0.5° or greater and 2° or less. When the angle is less than 0.5°, the service life of the mold is rapidly reduced because stress on the mold increases when the slider preform is released from the mold and the mold deforms (reducing the service life of the mold). When the angle is greater than 2° , the effect of extending the service life of the mold is insufficient, and an additional drawback is magnified in that the compression chamber capacity is reduced (when the widths of the tooth tips are made equal).

In the method for manufacturing a compressor slider, the thin scroll portion has a tooth section that presents a trapezoidal shape when the tooth is cut along a plane that includes the centerline and is orthogonal to the first plate surface. Accordingly, with this method for manufacturing a compressor slider, the slider preform can be released from the mold with greater ease. Therefore, with this method for manufacturing a compressor slider, the service life of the mold can be extended and costs can be reduced.

The method for manufacturing a compressor slider according to an eighteenth aspect is the method for manufacturing a compressor slider according to any of the twelfth through seventeenth aspects, wherein at least one area selected from an angle portion and a base portion of the thin scroll portion has a rounded shape. It is preferred that the radius of the rounded shape be greater than 0.3 mm and less than half the width of the distal end of the angle portion side of the thin scroll portion. When the radius of the rounded shape is 0.3 mm or less, the service life of the mold is rapidly reduced, and when the radius of the rounded shape is equal to or greater than half the width of the distal end of the angle portion side of the thin scroll portion, the seal surface of the tooth tip is lost and gas leakage increases at the distal end of the thin scroll portion.

In this method for manufacturing a compressor slider, at least one area selected from an angle portion and a base portion of the thin scroll portion has a rounded shape. Accordingly, with the method for manufacturing a compressor slider, the slider preform can be made more easily releasable from the mold. Therefore, with this method for manufacturing a compressor slider, the service life of the mold can be extended and costs can be reduced.

A compressor according to the nineteenth aspect comprises a slider manufactured by the method for manufacturing a compressor slider as recited in any of the first aspect through the eighteenth aspect.

Accordingly, the compressor can be manufactured at low cost. Also, with this compressor, gas refrigerant leakage is reduced, and, as a result, a compression step with greater efficiency than a conventional compression step can be achieved. Furthermore, noise can be reduced in this compressor because impact due to contact can be alleviated by a resin coating layer if there is contact between sliders.

The compressor according to a twentieth aspect is compressor according to the nineteenth aspect, wherein carbon dioxide is compressed. Preferably used as the coating resin in such a case is a fluororesin that has high heat resistance (particularly required in a compressor for a water heater) and is a poor eluant for low-molecular-weight oligomer. Additional examples include polyether ether ketone (PEEK) resin, polyphenylene sulfide resin (PPS) resin, polyethylene terephthalate (PET) resin, and polyethylene naphthalate (PEN) resin.

The compressor has a slider that can be provided with high strength and improved sliding properties. Accordingly, this compressor is particularly effective in the case that carbon dioxide is used as a refrigerant.

### <Effect of the Invention>

With the method for manufacturing a compressor slider according to the first aspect, a compressor slider can be manufactured at lower cost than by a method for manufacturing a compressor slider in which "a slider preform for a compressor is manufactured by thixocasting, and the slider preform is machine finished with ultrafine precision to obtain the final slider." Also, with this method for manufacturing a compressor slider, only the resin portion having a low hardness is finished, rather than the slider preform having a high hardness manufactured by thixocasting being finished. Accordingly, the finishing precision can be improved by adopting this method for manufacturing a compressor slider. Therefore, when the slider is a movable scroll or a fixed scroll, the gap formed when the movable scroll and the fixed scroll mesh together can be set to be small. Therefore, gas refrigerant leakage is reduced by adopting this method for manufacturing a compressor slider, and, as a result, a compression step that is more efficient than conventional compression can be achieved. Furthermore, since resin has greater elasticity than metal, impact due to contact can be reduced if there is contact between sliders, and noise can therefore be reduced.

With the method for manufacturing a compressor slider according to the second aspect, a slider can be manufactured with greater precision (near-net shaping is made possible) than conventional sand mold casting. It is possible to substantially reliably obtain an iron slider preform in which at least one property selected from the tensile strength and the tensile modulus of elasticity is higher than that of flake graphite cast iron.

With the method for manufacturing a compressor slider according to the third aspect, it is possible to substantially reliably obtain an iron slider preform in which at least one property selected from the tensile strength and the tensile modulus of elasticity is higher than that of flake graphite cast iron.

With the method for manufacturing a compressor slider according to the fourth aspect, a slider can be manufactured with greater precision (near-net shaping is made possible) than conventional sand mold casting. It is possible to substantially reliably obtain an iron slider preform in which at least one property selected from the tensile strength and the tensile modulus of elasticity is higher than that of flake graphite cast iron.

With the method for manufacturing a compressor slider according to the fifth aspect, the adhesion between the slider preform and the resin coating layer can be improved by an anchoring effect or the like.

With the method for manufacturing a compressor slider according to the sixth aspect, the surface of the slider preform can be easily roughened.

With the method for manufacturing a compressor slider according to the seventh aspect, a resin coating layer can be easily formed on the slider preform.

With the method for manufacturing a compressor slider according to the eighth aspect, a resin coating layer can be readily applied in an overlapping manner with high quality. Therefore, a thick resin coating layer can be easily formed with this method for manufacturing a compressor slider.

With the method for manufacturing a compressor slider according to the ninth aspect, only the resin coating layer can be substantially reliably machined.

With the method for manufacturing a compressor slider according to the tenth aspect, the reliability of the slider can be maintained even when the slider is exposed to high temperatures. Good sliding properties can be imparted to the slider when the engineering plastic is a fluororesin, a polyether ether ketone resin, or a polyphenylene sulfide resin.

With the method for manufacturing a compressor slider according to the eleventh aspect, the resin coating layer can be easily machined and the finishing precision can be improved.

With the method for manufacturing a compressor slider according to the twelfth aspect, a movable scroll or a fixed scroll can be manufactured.

With the method for manufacturing a compressor slider according to the thirteenth aspect, it is possible to improve the finishing precision of the thin scroll portion alone.

With the method for manufacturing a compressor slider according to the fourteenth aspect, it is possible to improve the finishing precision of the lateral surface of the thin scroll portion alone.

With the method for manufacturing a compressor slider according to the fifteenth aspect, the sliding properties of the groove portion can be improved.

With the method for manufacturing a compressor slider according to the sixteenth aspect, the sliding properties of the inner surface of the cylindrical portion can be improved.

With the method for manufacturing a compressor slider according to the seventeenth aspect, the slider preform can be released from the mold with greater ease. Therefore, with this method for manufacturing a compressor slider, the service life of the mold can be extended and the occurrence of defects in the sliding member can be prevented.

With the method for manufacturing a compressor slider according to the eighteenth aspect, the slider preform can be made more easily releasable from the mold. Therefore, with this method for manufacturing a compressor slider, the service life of the mold can be extended and the occurrence of defects in the sliding member can be prevented.

With the compressor according to the nineteenth aspect, gas refrigerant leakage is reduced, and, as a result, a compression step with greater efficiency than a conventional compression step can be achieved. Furthermore, noise can be reduced in this compressor because impact due to contact can be alleviated by a resin coating layer if there is contact between sliders.

The compressor according to the twentieth aspect has a slider that can be provided with high strength and improved sliding properties. Accordingly, this compressor is particularly effective in the case that carbon dioxide is used as a refrigerant.

### BRIEF DESCRIPTION OF THE DRAWINGS

FIG. 1 is a longitudinal sectional view of a high/low pressure dome-type compressor according to an embodiment of the present invention;
FIG. 2 is a top view of a movable scroll adopted in the high/low pressure dome-type compressor according to an embodiment of the present invention;
FIG. 3 is a bottom view of a movable scroll adopted in the high/low pressure dome-type compressor according to an embodiment of the present invention; and
FIG. 4 is a longitudinal sectional view cut in which the movable scroll adopted in the high/low pressure dome-type compressor according to an embodiment of the present invention is cut along a surface that includes the design center line.

### DESCRIPTION OF THE REFERENCE SYMBOLS

- 17: Drive shaft (completed slider)
- 23: Housing (completed slider)
- 24: Fixed scroll (completed slider)
- 25: Movable scroll preform (slider preform)
- 25a: Resin coating layer
- 25b: Angle portion
- 25c: Corner portion (base portion)
- 26: Movable scroll (completed slider)
- 39: Oldham ring (completed slider)
- 60: Lower main bearing (completed slider)
- 24a, 26a: End plate (flat plate portion)
- 24b, 26b: Wrap (thin scroll portion)
- 26c: Bearing portion (cylindrical portion)
- 26d: Groove portion

### BEST MODE FOR CARRYING OUT THE INVENTION

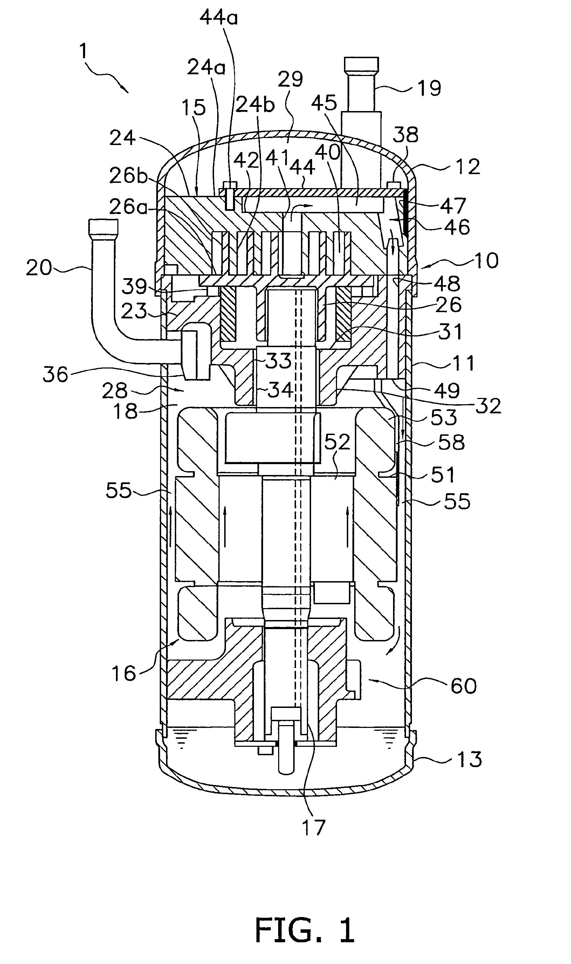

A high/low pressure dome-type compressor 1 according to the present embodiment constitutes a refrigerant circuit together with an evaporator, a condenser, an expansion mechanism, and the like, and acts to compress a gas refrigerant (e.g., fluorocarbon refrigerant, or natural refrigerant such as carbon dioxide) in the refrigerant circuit, and is primarily composed of an oblong cylindrical hermetically sealed dome-type casing 10, a scroll compression mechanism 15, an Oldham ring 39, a drive motor 16, a lower main bearing 60, a suction tube 19, and a discharge tube 20, as shown in FIG. 1. The constituent elements of the high/low pressure dome-type compressor 1 will be described in detail below.

### (Details of the constituent elements of a high/low pressure dome-type compressor)

### (1) Casing

The casing 10 has a substantially cylindrical trunk casing 11, a saucer-shaped upper wall portion 12 welded in an airtight manner to an upper end of the trunk casing 11, and a saucer-shaped lower wall portion 13 welded in an airtight manner to a lower end of the trunk casing 11. Primarily accommodated in the casing 10 are the scroll compression mechanism 15 for compressing gas refrigerant and the drive motor 16 disposed below the scroll compression mechanism 15. The scroll compression mechanism 15 and the drive motor 16 are connected by a drive shaft 17 disposed so as to extend in the vertical direction inside the casing 10. As a result, a clearance space 18 is formed between the scroll compression mechanism 15 and the drive motor 16.

### (2) Scroll compression mechanism

The scroll compression mechanism 15 is primarily composed of a housing 23, a fixed scroll 24 provided in close contact above the housing 23, and a movable scroll 26 for meshing with the fixed scroll 24, as shown in FIG. 1. The constituent elements of the scroll compression mechanism 15 will be described in detail below.

### a) Housing

The housing 23 is press-fitted and secured to the trunk casing 11 in peripheral direction across the entire external peripheral surface of the housing. In other words, the trunk casing 11 and the housing 23 are in kept close contact in an airtight manner across the entire periphery. For this reason, the interior of the casing 10 is partitioned into a high-pressure space 28 below the housing 23 and a low-pressure space 29 above the housing 23. Also, the fixed scroll 24 is fastened and secured by a bolt 38 to the housing 23 so that the upper end surface of the housing is in close contact with the lower end surface of the fixed scroll 24. A housing concavity 31 concavely disposed in the center of the upper surface of the housing, and a bearing portion 32 that extends downward from the center of the lower surface of the housing, are formed in the housing 23. A bearing hole 33 that passes through in the vertical direction is formed in the bearing portion 32, and a drive shaft 17 is rotatably fitted to the bearing hole 33 via a shaft bearing 34.

In the present embodiment, the housing 23 is manufactured using a novel and special manufacturing method. The manufacturing method is described in detail below in the section titled "Method for manufacturing a slider."

### b) Fixed scroll

The fixed scroll 24 is primarily composed of an end plate 24a and a scroll (involute shape) wrap 24b formed on the lower surface of the end plate 24a. In the present embodiment, the angle portion and the corner portion of the wrap 24b have a rounded shape that fits into the angle portion and corner portion of the wrap 26b of the movable scroll. When the wrap 24b is cut along a plane that includes the design center, the shape of the wrap 24b is trapezoidal, with an angle of 1° formed by the bottom side and the sloped side. A discharge channel 41 that is in communication with a compression chamber 40 (described later), and an enlarged concave portion 42 that is in communication with the discharge channel 41, are formed in the end plate 24a. The discharge channel 41 is formed so as to extend in the vertical direction in the center portion of the end plate 24a. The enlarged concave portion 42 is composed of a concave portion that is concavely provided to the upper surface of the end plate 24a and widens in the horizontal direction. A lid body 44 is fastened and secured using a bolt 44a to the upper surface of the fixed scroll 24 so as to straddle the enlarged concave portion 42. A muffler space 45 composed of an expansion chamber for muffling the operation noise of the scroll compression mechanism 15 is formed by covering the enlarged concave portion 42 with the lid body 44. The fixed scroll 24 and the lid body 44 are sealed by close contact via packing, which is not depicted.

In the present embodiment, the fixed scroll 24 is manufactured using a novel and special manufacturing method. The manufacturing method is described in detail below in the section titled "Method for manufacturing a slider."

### c) Movable scroll

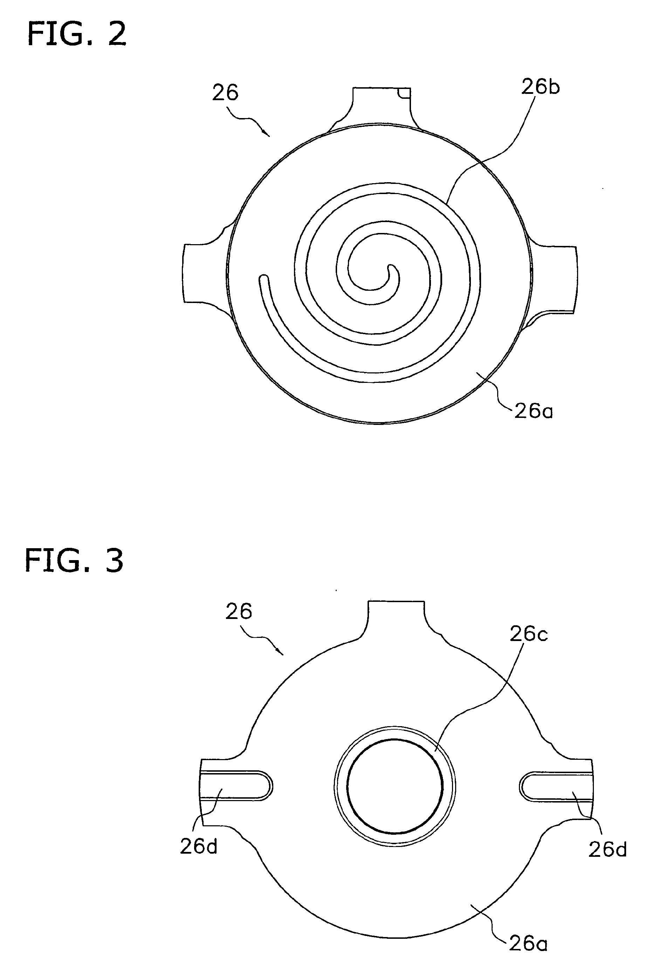

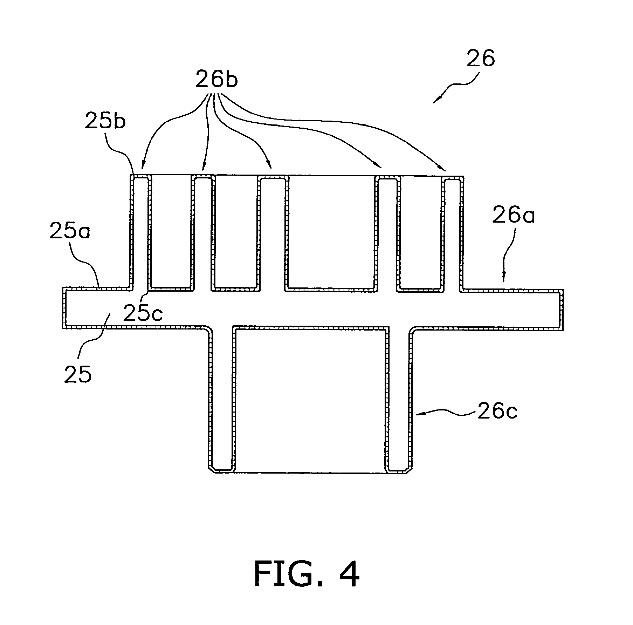

The movable scroll 26 is primarily composed of an end plate 26a, a scroll (involute shape) wrap 26b formed on the upper surface of the end plate 26a, a bearing portion 26c formed on the lower surface of the end plate 26a, and a groove portion 26d (see FIG 3) formed in the two ends of the end plate 26a. In the present embodiment, the angle portion 26e and the corner portion 26f of the wrap 26b have a rounded shape that fits into the angle portion and corner portion of the wrap 24b of the fixed scroll (see FIG. 4). When the wrap 26b is cut along a plane that includes the design center, the shape of the wrap 26b is trapezoidal, with an angle of 1° formed by the bottom side and the sloped side (FIG. 4). The movable scroll 26 is supported by the housing 23 via an Oldham ring 39 (described later) fitted into the groove portion. The upper end of the drive shaft 17 is fitted into the bearing portion 26c. The movable scroll 26, by being incorporated into the scroll compression mechanism 15 in this manner, nonrotatably orbits the interior of the housing 23 due to the rotation of the drive shaft 17. The wrap 26b of the movable scroll 26 meshes with the wrap 24b of the fixed scroll 24, and the compression chamber 40 is formed between the contact portions of the two wraps 24b, 26b. In the compression chamber 40, the capacity between the two wraps 24b, 26b contracts toward the center in accompaniment with the orbiting of the movable scroll 26. In the high/low pressure dome-type compressor 1 according to the present embodiment, gas refrigerant is designed to be compressed in this manner.

In the present embodiment, the movable scroll 26 is manufactured using a novel and special manufacturing method. The manufacturing method is described in detail below in the section titled "Method for manufacturing a slider."

### d) Other

A communication channel 46 is formed in the scroll compression mechanism 15 across the fixed scroll 24 and the housing 23. The communication channel 46 is formed so that a scroll-side channel 47, notched and formed in the fixed scroll 24, and a housing-side channel 48, notched and formed in the housing 23, are in communication with each other. The upper end of the communication channel 46, i.e., the upper end of the scroll-side channel 47 opens to the enlarged concave portion 42, and the lower end of the communication channel 46, i.e., the lower end of the housing-side channel 48 opens to the lower end surface of the housing 23. In other words, a discharge port 49 through which refrigerant of the communication channel 46 flows to the clearance space 18 is constituted by the lower end opening of the housing-side channel 48.

### (3) Oldham ring

An Oldham ring 39 is a member for preventing the movable scroll from rotating, as described above, and is fitted into an Oldham groove (not shown) formed in the housing 23. The Oldham groove is an elliptical groove disposed in a position that faces the housing 23.

### (4) Drive motor

The drive motor 16 is a DC motor in the present embodiment, and is primarily composed of an annular stator 51 secured to the inner wall surface of the casing 10, and a rotor 52 rotatably accommodated with a small gap (air gap channel) inside the stator 51. The drive motor 16 is disposed so that the upper end of a coil end 53 formed at the upper side of the stator 51 is at substantially the same height position as the lower end of the bearing portion 32 of the housing 23.

A copper wire is wrapped around the teeth portion of the stator 51, and the coil end 53 is formed above and below the stator. The external peripheral surface of the stator 51 is provided with core cut portions that have been notched and formed in a plurality of locations from the upper end surface to the lower end surface of the stator 51 and at prescribed intervals in the peripheral direction are disposed. A motor cooling channel 55 that extends in the vertical direction is formed by the core cut portions between the trunk casing 11 and the stator 51.

A rotor 52 is drivably connected to the movable scroll 26 of the scroll compression mechanism 15 via the drive shaft 17 disposed in the axial center of the trunk casing 11 so as to extend in the vertical direction. A guide plate 58 for guiding refrigerant that has flowed out of the discharge port 49 of the communication channel 46 to the motor cooling channel 55 is disposed in the clearance space 18.

### (5) Lower main bearing

The lower main bearing 60 is disposed in a lower space below the drive motor 16. The lower main bearing 60 is secured to the trunk casing 11, constitutes the lower end-side bearing of the drive shaft 17, and supports the drive shaft 17.

In the present embodiment, the lower main bearing 60 is manufactured using a novel and special manufacturing method. The manufacturing method is described in detail below in the section titled "Method for manufacturing a slider."

### (6) Suction tube

The suction tube 19 is used for guiding refrigerant of the refrigerant circuit to the scroll compression mechanism 15 and is fitted in an airtight manner to the upper wall portion 12 of the casing 10. The suction tube 19 passes through the low-pressure space 29 in the vertical direction, and the inside end portion is fitted into the fixed scroll 24.

### (7) Discharge tube

The discharge tube 20 is used for discharging the refrigerant inside the casing 10 to the exterior of the casing 10, and is fitted in an airtight manner into the trunk casing 11 of the casing 10. The discharge tube 20 has an inside end portion 36 formed in the shape of a cylinder extending in the vertical direction, and is secured to the lower end portion of the housing 23. The inside end opening of the discharge tube 20, i.e., the inlet, is opened downward.

### (Method for manufacturing a slider)

In the high/low pressure dome-type compressor 1 according to the present embodiment, a drive shaft 17, a housing 23, a fixed scroll 24, a movable scroll 26, an Oldham ring 39, and a lower main bearing 60 are slider. In the present embodiment, slider such as the housing 23, the fixed scroll 24, the movable scroll 26, and the lower main bearing 60 are manufactured using the method of manufacture described below.

### (Raw material)

### a) Iron material

The iron material according to the present embodiment is billets to which the following components have been added: C: 2.3 to 2.4 wt%, Si: 1.95 to 2.05 wt%, Mn: 0.6 to 0.7 wt%, P: <0.035 wt%, S: <0.04 wt%, Cr: 0.00 to 0.50 wt%, Ni: 0.50 to 1.00 wt%. As used herein, weight ratios are ratios in relation to the entire amount. Also, the term "billet" refers to a pre-molded material in which an iron material having the above-described components has been temporarily melted in a melting furnace and thereafter molded into a cylindrical shape or the like using a continuous casting apparatus. Here, the content of C and Si is determined so as to satisfy two objects: to achieve a tensile strength and tensile modulus of elasticity that are greater than those of flake graphite cast iron, and to provide a suitable fluidity for molding a slider preform with a complex shape. The Ni content is determined so as to achieve a metal structure that improves the rigidity of the metal structure and is suitable for preventing surface cracks during molding.

### b) Resin coating fluid

A PAI/PTFE coating fluid obtained by mixing polytetrafluoroethylene (PTFE) resin powder with a polyamide-imide resin solution is used as the resin coating fluid according to the present embodiment.

### (2) Manufacturing step

The slider according to the present embodiment is manufactured via a thixocasting step, a surface treatment step, a resin coating step, and a final finishing step. The steps will be described in detail below.

### a) Thixocasting step

In the thixocasting step, first, billets are heated by high-frequency heating to form a semi-molten state. Next, when the billets in the semi-molten state are introduced into a prescribed mold, the billets are molded to a desired shape while a prescribed pressure is applied by a die cast machine to obtain a slider preform. When the slider preform is removed from the mold and rapidly cooled, the metal structure of the slider preform becomes a white iron overall. When the slider preform is thereafter heat treated, the metal structure of the slider preform changes from a white iron structure to a metal structure composed of a pearlite/ferrite base and granular graphite. The graphitization and pearlite transformation of the white iron structure can be adjusted by adjusting the heat treatment temperature, the holding time, the cooling rate, and the like. As described in, e.g., "Research of Semi-molten Iron Molding Techniques," in Honda R&D Technical Review, Vol. 14, No. 1, a metal structure having a tensile strength of about 500 MPa to 700 MPa and a Brinell hardness of about 150 to 200 can be obtained by holding the metal for 60 minutes at 950° C and thereafter gradually cooling the metal in the furnace at a cooling rate of 0.05 to 0.10° C/sec. Such a metal structure is primarily ferrite, and is therefore soft and has excellent machinability. However, the built-up edge of a blade during machining may be formed, and the service life of the blade tool may be reduced. The metal is held for 60 minutes at 1000° C, then air cooled, held for a prescribed length of time at a temperature that is slightly lower than the initial temperature, and thereafter air cooled, whereby a metal structure having a tensile strength of about 600 MPa to 900 MPa and a Brinell hardness of about 200 to 250 can be obtained. In such a metal structure, a substance whose hardness is equal to that of flake graphite cast iron has the same machinability as flake graphite cast iron, and better machinability than spheroidal graphite cast iron having the same ductility and rigidity. Also possible is a method in which the metal is held for 60 minutes at 1000° C, cooled in oil, held for a prescribed length of time at a temperature that is slightly lower than the initial temperature, and thereafter air cooled, whereby a metal structure having a tensile strength of about 800 MPa to 1300 MPa and a Brinell hardness of about 250 to 350 can be obtained. Such a metal structure is primarily pearlite, and is therefore hard and has poor machinability but possesses excellent abrasion resistance. However, there is a possibility that the metal will damage the other member of the sliding pair due to excessive hardness.

In the present embodiment, the tensile strength of the slider preform is set to be 600 MPa or higher.

### b) Surface treatment step

In the surface treatment step, the surface of a slider preform is roughened by zinc phosphate Parkerizing. In the present embodiment, the target surface roughness (Rz) is set to 5 to 50 µm.

In the present embodiment, the surface roughness is measured in accordance with JIS B0651. In this case, a stylus having a distal end radius of 2 µm and a distal end taper angle of 60° was used.

### c) Resin coating step

In the resin coating step, a PAI/PTFE coating fluid is coated onto the slider preform by spray coating while the slider preform is rotated about the design center. At this time, the slider preform is coated while being heated to a temperature of about 90° C with the aim of removing the solvent, and is thereafter pre-dried for about 30 minutes at about 90° C. The thickness of the coating that can be applied in a single cycle is about several tens of micrometers, and a multilayered film is formed on the slider preform by repeating this step a plurality of times in accordance with the required thickness. When the thickness has reached a desired thickness, the coating is ultimately calcined at a temperature of about 200° C to assure a required hardness. It is possible that solvent left behind in the resin will foam during calcination, the coated film will be destroyed, the adhesion between the multilayered films will be reduced, and the wearing and peeling will occur. In order to prevent such defects, the heating temperature of the slider preform and the temperature and time of pre-drying must be adjusted. Essentially, interlayer adhesion is degraded with excessively increasing temperature, but foaming will occur when the temperature is excessively low. When the pre-drying time is excessively short, the solvent is not completely removed and foaming occurs. When the time is excessively long, too much of the solvent is removed and adhesion between layers is degraded. The surface hardness of the multilayered film is measured by nanoindentation. In the present embodiment, a product having a surface hardness of 0.1 GPa or higher is considered to be acceptable. Specifically, it is preferred that the calcining conditions be stepped, and an example of preferred conditions is a sequence of 120° C × 40 minutes, 150° C × 40 minutes, 220° C × 40 minutes, and 280° C × 40 minutes.

### d) Final finishing step

In the final finished step, a multilayered film formed on the slider preform is machined and the slider is completed.

### (3) General overview of the final slider

Here, a general overview of the final slider will be described using the movable scroll 26 and the fixed scroll 24 as an example.

The movable scroll 26 is primarily formed from a movable scroll preform 25 and a resin coating layer 25a, as shown in FIG. 4. The movable scroll preform 25 is in a correspondence relationship with the movable scroll 26 and is formed to be slightly smaller than the movable scroll 26. In the movable scroll preform 25, the thickness of the portion that corresponds to the end plate 26a is 8 mm. The ratio of the thickness of the portion that corresponds to the wrap 26b to the thickness of the portion that corresponds to the end plate 26a is 0.4 (i.e., the thickness of the portion that corresponds to the wrap 26b is 3.2 mm). The ratio of the thickness of the portion that corresponds to the bearing portion 26c to the thickness of the portion that corresponds to the end plate 26a is 0.5 (i.e., the thickness of the portion that corresponds to the bearing portion 26c is 4 mm). The ratio of the height of the portion that corresponds to the wrap 26b to the thickness of the wrap 26b is 15 (i.e., the height of the portion that corresponds to the wrap 26b is 48 mm). In the movable scroll preform 25, the angle portion 25b and the corner portion 25c of the portions that correspond to the wrap 26b have a rounded shape, in the same manner as the movable scroll 26. The radius of the rounded shape is 0.5 mm. When the portion that corresponds to the wrap 26b is cut along a plane that includes the design center, the shape of the portion that corresponds to the wrap 26b is a trapezoidal shape in which the angle formed by the bottom side and the sloped sides is 1° , in the same manner as in the wrap 26b of the movable scroll 26.

On the other hand, the fixed scroll 24 is primarily formed from a fixed scroll preform (not shown) and a resin coating layer (not shown). The fixed scroll preform is in a correspondence relationship with the fixed scroll 24 and is formed to be slightly smaller than the fixed scroll 24. In the fixed scroll preform, the thickness of the portion that corresponds to the end plate 24a is 8 mm. The ratio of the thickness of the portion that corresponds to the wrap 24b to the thickness of the portion that corresponds to the end plate 24a is 0.4 (i.e., the thickness of the portion that corresponds to the wrap 24b is 3.2 mm). The ratio of the height of the portion that corresponds to the wrap 24b to the thickness of the wrap 24b is 15 (i.e., the height of the portion that corresponds to the wrap 24b is 48 mm). In the fixed scroll preform, the angle portion (not shown) and the corner portion (not shown) of the portions that correspond to the wrap 24b have a rounded shape, in the same manner as in the fixed scroll 24. The radius of the rounded shape is 0.5 mm. When the portion that corresponds to the wrap 24b is cut along a plane that includes the design center, the shape of the portion that corresponds to the wrap 24b is a trapezoidal shape in which the angle formed by the bottom side and the sloped sides is 1° , in the same manner as the wrap 24b of the fixed scroll 24.

### (Operation of a high/low pressure dome-type compressor)

When the drive motor 16 is driven, the drive shaft 17 rotates, and the movable scroll orbits without rotation. At this point, low-pressure gas refrigerant passes through the suction tube 19, is suctioned from the peripheral edge of the compression chamber 40 into the compression chamber 40, is compressed as the capacity of the compression chamber 40 changes, and becomes a high-pressure gas refrigerant. The high-pressure gas refrigerant passes through from the center portion of the compression chamber 40 through the discharge channel 41; is discharged to the muffler space 45, then passes through the communication channel 46, the scroll-side channel 47, the housing-side channel 48, and the discharge port 49; flows out to the clearance space 18; and flows between the guide plate 58 and the inner surface of the trunk casing 11 downward. A portion of the gas refrigerant branches off and flows in the peripheral direction between the guide plate 58 and the drive motor 16 when the gas refrigerant flows between the guide plate 58 and the inner surface of the trunk casing 11 downward. At this point, lubricating oil mixed with the gas refrigerant separates off. On the other hand, the other portion of the branched gas refrigerant flows downward through the motor cooling channel 55 to the space below the motor, and then reverses course and flows upward through the motor cooling channel 55 on the side (left side in FIG. 1) facing the communication channel 46 or the air gap channel between the stator 51 and the rotor 52. Thereafter, the gas refrigerant that has passed through the guide plate 58 and the gas refrigerant that has flowed from the air gap channel or the motor cooling channel 55 merge at the clearance space 18. The merged gas refrigerant flows from the inside-end portion 36 of the discharge tube 20 to the discharge tube 20, and is then discharged to the exterior of the casing 10. The gas refrigerant discharged to the exterior of the casing 10 circulates through the refrigerant circuit, thereafter passes through the suction tube 19 again, and is suctioned and compressed in the scroll compression mechanism 15.

### (Characteristics of the high/low pressure dome-type compressor)

### (1)

In the present embodiment, the sliders such as a housing 23, a fixed scroll 24, a movable scroll 26, and a lower main bearing 60 are manufactured via a thixocasting step, a surface treatment step, a resin coating step, and a final finishing step. Accordingly, in the method for manufacturing a slider according to the present embodiment, the final finishing can be completed in a shorter amount of time than with ultrafine precision finishing for a high-hardness slider preform manufactured by thixocasting. Therefore, machining costs can be reduced by adopting this method for manufacturing a slider. Also, with this method for manufacturing a slider, the high-hardness slider preform manufactured by thixocasting is not machined. Rather the resin having a lesser hardness is machined. Accordingly, tool wear costs can be reduced by adopting this method for manufacturing a slider. As a result of adopting this method for manufacturing a slider, a compressor slider can be manufactured at lower cost than the method for manufacturing a compressor slider in which "a compressor slider preform is manufactured by thixocasting, and the slider preform is finished by ultrafine finishing to obtain the final slider." Also, in this method for manufacturing a compressor slider, only the resin portion having a low hardness is finished, rather than the slider preform having a high hardness manufactured by thixocasting being finished. Accordingly, the finishing precision can be improved by adopting this method for manufacturing a slider.

### (2)

With the high/low pressure dome-type compressor 1 according to the present embodiment, the fixed scroll 24 and the movable scroll 26 are manufactured via a thixocasting step, a surface treatment step, a resin costing step, and a final finishing step. The tensile strength of the slider preform is preferably 600 MPa or higher. In the present embodiment, the teeth of the fixed scroll 24 and movable scroll 26 can be made thinner, and the diameter of the scroll can be reduced. Therefore, in the present embodiment, the gas compression load that acts in the axial direction of the movable scroll 26 can be reduced. As a result, in the present embodiment, the thrust bearing loss is effectively reduced. Also, in the present embodiment, the tooth height of the movable scroll 26 and the fixed scroll 24 can be increased while keeping the same outside diameter size, and the suction capacity can be increased. Accordingly, in the present embodiment, the capacity of the compressor 1 can be increased.

### (3)

In the method for manufacturing a slider according to the present embodiment, the chemical conversion treatment is carried out to the slider preform in the surface treatment step so that the surface roughness (Rz) of the slider preform is 5 to 50 µm. Accordingly, with this method for manufacturing a compressor slider, sufficient anchoring effect can be obtained, and the amount of resin that is used can be kept at an optimum level.

### (4)

In the method for manufacturing a slider of the present embodiment, a PAI/PTFE coating fluid is coated onto the slider preform by spray coating while the slider preform is rotated about the design center in the resin coating step. Accordingly, with this method for manufacturing a slider, a resin coating layer 25a can be easily formed on the slider preform.

### (5)

In the method for manufacturing a slider of the present embodiment, polyamide imide resin and polytetrafluoroethylene resin is used to form the resin coating layer 25a. Accordingly, in the high/low pressure dome-type compressor 1 according to the present embodiment, the reliability of the slider can be maintained and good sliding properties can be imparted to the slider at the same time, even in the case that the slider is exposed to high temperatures.

### (6)

In the method for manufacturing a slider of the present embodiment, the surface hardness is measured by nanoindentation in the resin coating step, and a product having a surface hardness of 0.1 GPa or higher is considered to be acceptable. Accordingly, in the present embodiment, the resin coating layer 25a can be easily machined in the final finishing step, and finishing precision can be improved.

### (7)

A resin coating layer 25a is formed on the groove portion 26d of the movable scroll 26 according to the present embodiment. Accordingly, sliding between the groove portion 26d and the Oldham ring 39 is improved.

### (8)

A resin coating layer 25a is formed on the bearing portion 26c of the movable scroll 26 according to the present embodiment. Accordingly, sliding between the bearing portion 26c and the drive shaft 17 is improved.

### (9)

In the present embodiment, when the portion that corresponds to the wrap 26b of the movable scroll 26 in the movable scroll preform 25 is cut along a plane that includes the design center, the shape of the portion that corresponds to the wrap 26b is a trapezoidal shape in which the angle formed by the bottom and sloped sides is 1° , in the same manner as the wrap 26b of the movable scroll 26. Accordingly, the movable scroll preform 25 can be easily released from the mold in the thixocasting step. Therefore, in the present embodiment, the service life of the mold of the movable scroll preform 25 can be extended.

### (10)

In the present embodiment, the angle portion 25b and the corner portion 25c of the portion that corresponds to the wrap 26b of the movable scroll 26 in the movable scroll preform 25 have a rounded shape. Accordingly, the movable scroll preform 25 can be easily released from the mold in the thixocasting step. Therefore, in the present embodiment, the service life of the mold of the movable scroll preform 25 can be extended. Also, the radius of the movable scroll preform 25 is set to 0.5 mm. Accordingly, a 2.2-mm flat portion can be maintained in the thickness direction at the distal end portion of the movable scroll 26, the seal characteristics relative to the thrust surface of the fixed scroll 24 can be maintained, and gas leakage can be effectively prevented.

### (11)

In the present embodiment, the angle portion and the corner portion of the portion that corresponds to the wrap 24b of the fixed scroll 24 among the fixed scroll preform has a rounded shape. Accordingly, the fixed scroll preform can be easily released from the mold in the thixocasting step. Therefore, in the present embodiment, the service life of the mold of the fixed scroll preform can be extended. Also, the radius of the fixed scroll preform is set to 0.5 mm. Accordingly, a 2.2-mm flat portion can be maintained in the thickness direction at the distal end portion of the fixed scroll 24, the seal characteristics relative to the thrust surface of the movable scroll 26 can be maintained, and gas leakage can be effectively prevented.

### (12)

In the present embodiment, the thickness of the portion that corresponds to the end plate 26a of the movable scroll 26 in the movable scroll preform 25, and the thickness of the portion that corresponds to the end plate 24a of the fixed scroll 24 among the fixed scroll preform, are 8 mm. For this reason, the generation of pinholes due to solidification and contraction in the end plate 24a and the end plate 26a can be effectively prevented in the movable scroll preform 25 and the fixed scroll preform.

### (13)

In the present embodiment, the ratio of the thickness of the portions that correspond to the wraps 24b, 26b to the thickness of the portions that correspond to the end plates 24a, 26a is 0.4 in the movable scroll preform 25 and the fixed scroll preform. Accordingly, the inclusion of air in the thixocasting step of the movable scroll preform 25 and the fixed scroll preform can be effectively prevented.

### (14)

In the present embodiment, the ratio of the thickness of the portion that corresponds to the bearing portion 26c to the thickness of the portion that corresponds to the end plate 26a is 0.5. Accordingly, the inclusion of air in the thixocasting step of the movable scroll preform 25 can be effectively prevented.

### (Modified examples)

### (A)

In the embodiment above, an airtight high/low pressure dome-type compressor 1 was used, but the compressor may be a high-pressure dome-type compressor or a low-pressure dome-type compressor. The compressor may also be a semi-airtight or open compressor.

### (B)

In the embodiment above, a scroll compression mechanism 15 was used in the compressor 1, but the compression mechanism may be a rotary compression mechanism, a reciprocating compression mechanism, a screw compression mechanism, or the like. The scroll compression mechanism 15 may be a double-toothed or co-rotation-type scroll.

### (C)

In the embodiment above, the slider preform was manufactured by thixocasting, but the slider preform may be composed of pearlitic malleable cast iron.

### (D)

In the embodiment above, the slider preform was manufactured by thixocasting, but the slider preform may be manufactured by rheocasting (semi-solid molding).

### (E)

In the embodiment above, the slider preform was manufactured by thixocasting, but the slider preform may be composed of spheroidal graphite cast iron.

### (F)

In the embodiment above, the slider preform was manufactured by thixocasting, but the slider preform may be composed of spheroidal vanadium carbide cast iron or another spheroidal carbide cast iron. However, spheroidal vanadium carbide cast iron has inferior machinability in comparison with flake graphite cast iron. Therefore, when the slider preform is made of spheroidal vanadium carbide cast iron in this manner, it is preferred that the machined locations of the slider preform except the hot fluid port, the hot fluid reservoir, and the like are eliminated, and the entire surface of the slider preform be coated with a resin.

### (G)

In the embodiment above, the slider preform was manufactured by thixocasting, but the slider preform may be manufactured by a lost-wax method.

### (H)

In the embodiment above, the surface of the slider preform was roughened by zinc phosphate Parkerizing, but the surface of the slider preform may be roughened by a blast treatment.

### (I)

In the embodiment above, the resin coating layer 25a was formed on the slider preform by spray coating, but the resin coating layer 25a may be formed on the slider preform by injection molding.

### (J)

In the embodiment above, the resin coating layer 25a was formed on the slider preform by spray coating, but the resin coating layer 25a may be formed on the slider preform by dispenser coating or roll coating.

### (K)

In the embodiment above, polyamide imide resin and polytetrafluoroethylene were used as the coating resin, but in lieu of these, it is also possible to use polyamide resin, polyimide resin, polyether imide resin, polyether nitrile resin, polyether sulfone resin, polycarbonate resin, polyacetal resin, modified polyphenylene ether resin, polybutylene terephthalate resin, reinforced polyethylene terephthalate resin, polyphenylene sulfide resin, polyallylate resin, polysulfone resin, polyether ketone resin, polyether ether ketone resin, liquid crystal polymer, phenol resin, melamine resin, urea resin, silicone resin, epoxy resin and the like. These may be used alone or as components in a blend.

### (L)

In the embodiment above, polytetrafluoroethylene resin was used as the fluororesin in the coating resin, but in lieu of these, it is also possible to use a tetrafluoroethylene/perfluoroalkyl vinyl ether copolymer (PFA), a tetrafluoroethylene/hexafluoropropylene copolymer (FEP), a tetrafluoroethylene/ethylene copolymer (ETFE), polyvinylidene fluoride (PVDF), polychlorotrifluoroethylene (PCTFE) and the like. These may be used alone or as components in a blend.

### (M)

In the embodiment above, the resin coating layer 25a was formed over the entire housing 23 and lower main bearing 60, but the resin coating layer 25a may be formed only on the wall of a lower bearing portion 62 of the lower main bearing 60, and the wall of the bearing hole 33 of the housing 23.

### (N)

In the embodiment above, the resin coating layer 25a was formed on both the fixed scroll 24 and the movable scroll 26, but the resin coating layer 25a may be formed on only one of these two.

### (O)

In the embodiment above, a resin coating layer 25a was formed over the entire movable scroll 26, but the resin coating layer 25a may be formed only on the wrap formation surface of the portion that corresponds to the end plate 26a of the movable scroll preform 25 and the portion corresponding to the wrap 26b of the movable scroll preform 25. In such a case, the movable scroll preform 25 does not have the relationship of similarity to the movable scroll 26, the bearing formation side of the portion that corresponds to the end plate 26a, the portion that corresponds to the bearing portion 26c, the portion that corresponds to the groove portion 26d, and the like are formed in a shape that is substantially approximate to the final finishing shape. Also, in such a case, the bearing portion 26c and the groove portion 26d are machined. Also in this case, the resin coating layer 25a is preferably formed on the upper portion of the drive shaft 17.

### (P)

In the embodiment above, the resin coating layer 25a was disposed over the entire movable scroll 26, but the resin coating layer 25a may be formed only on a lateral surface of the portion that corresponds to the wrap 26b of the movable scroll 26. In such a case, the movable scroll preform 25 does not have the relationship of similarity to the movable scroll 26the portion that corresponds to the end plate 26a, the portion that corresponds to the bearing portion 26c, the portion that corresponds to the groove portion 26d, and the like are formed in a shape that is substantially approximate to the final finishing shape. Also, in such a case, the bearing portion 26c and the groove portion 26d are machined. Also in this case, the resin coating layer 25a is preferably formed on the upper portion of the drive shaft 17.

### (Q)

In the embodiment above, the resin coating layer 25a was disposed over the entire fixed scroll 24, but the resin coating layer 25a may be formed only on the wrap 24b and the wrap 24b formation surface of the end plate 24a of the fixed scroll 24.

### (R)

In the embodiment above, the resin coating layer 25a was disposed over the entire fixed scroll 24, but the resin coating layer 25a may be formed only on a lateral surface of the wrap 24b of the fixed scroll 24.

### (S)

In the embodiment above, the sliders such as the housing 23, the fixed scroll 24, the movable scroll 26, and the lower main bearing 60 were manufactured via a thixocasting step, a surface treatment step, a resin coating step, and a final finishing step, but the drive shaft 17, the Oldham ring 39, and the like may be manufactured via the same steps.

### (T)

In the movable scroll 26 according to the embodiment above, the wrap 26b had a trapezoidal shape in which the bottom side and the slope sides form an angle of 1° when the wrap 26b is cut along a plane that includes the design center, but the shape may be a trapezoidal shape in which the bottom side and the slope sides form an angle of 0.5 to 2° .

### (U)

In the fixed scroll 24 according to the embodiment above, the wrap 24b had a trapezoidal shape in which the bottom side and the slope sides form an angle of 1° when the wrap 24b is cut along a plane that includes the design center, but the shape may be a trapezoidal shape in which the bottom side and the slope sides form an angle of 0.5 to 2° .

### (V)

In the embodiment above, the sliders such as the housing 23, the fixed scroll 24, the movable scroll 26, and the lower main bearing 60 were manufactured via a thixocasting step, a surface treatment step, a resin coating step, and a final finishing step, but at least one component among the drive shaft 17, the housing 23, the fixed scroll 24, the movable scroll 26, the Oldham ring 39, and the lower main bearing 60 may be manufactured via the same steps.

### (W)

In the embodiment above, billets were used in which the following components were added: C: 2.3 to 2.4 wt%, Si: 1.95 to 2.05 wt%, Mn: 0.6 to 0.7 wt%, P: <0.035 wt%, S: <0.04 wt%, Cr: 0.00 to 0.50 wt%, Ni: 0.50 to 1.00 wt%. The elemental ratio of the iron material may be arbitrarily determined as long as the ratio does not depart from the spirit of the present invention.

### (X)

In the embodiment above, an Oldham ring was used as the rotation-preventing mechanism, but a pin, a ball cup ring, a crank, or any other mechanism may be used as the rotation-preventing mechanism.

### (Y)

In the embodiment above, an example was given of the case in which the compressor 1 was used in the refrigerant circuit, but the application is not limited to air conditioning, and can also be made to a compressor used alone or incorporated into a system, or to a blower, a supercharger, a pump, or the like.

### (Z)

A lubricating oil is present in the compressor 1 according to the embodiment above, but an oilless or oil-free (which may or may not contain oil) compressor, blower, supercharger, or pump may also be used.

### (α)

In the movable scroll preform 25 according to the embodiment above, the thickness of the portion corresponding to the end plate 26a was 8 mm, but the thickness of the portion corresponding to the end plate 26a may also be equal to or greater than the thickness derived from the required strength, or may be 10 mm or less.

### (β)

In the fixed scroll preform according to the embodiment above, the thickness of the portion corresponding to the end plate 24a was 8 mm, but the thickness of the portion corresponding to the end plate 24a may also be equal to or greater than the thickness derived from the required strength, or may be 10 mm or less.

### (γ)

In the movable scroll preform 25 according to the embodiment above, the radius of the rounded portions was 0.5 mm, but the radius of the rounded portions may be greater than 0.3 mm or less than half (i.e., 1.6 mm) the thickness of the portion that corresponds to the wrap 26b.

### (δ)

In the fixed scroll preform according to the embodiment above, the radius of the rounded portions was 0.5 mm, but the radius of the rounded portions may be greater than 0.3 mm or less than half (i.e., 1.6 mm) the thickness of the portion that corresponds to the wrap 24b.

### (ε)

In the movable scroll preform 25 according to the embodiment above, the ratio of the thickness of the portion corresponding to the wrap 26b to the thickness of the portion corresponding to the end plate 26a was 0.4, but the ratio may be 0.2 or greater and 0.6 or less.

### (ζ)

In the fixed scroll preform according to the embodiment above, the ratio of the thickness of the portion corresponding to the wrap 24b to the thickness of the portion corresponding to the end plate 24a was 0.4, but the ratio may be 0.2 or greater and 0.6 or less.

### (η)

In the movable scroll preform 25 according to the embodiment above, the ratio of the thickness of the portion corresponding to the bearing portion 26c in relation to the thickness of the portion corresponding to the end plate 26a was 0.5, but the ratio may be 0.3 or greater and less than 1.0.

### INDUSTRIAL APPLICABILITY

The method for manufacturing a compressor slider according to the present invention can be used to manufacture a low-cost compressor having a high-efficiency compression mechanism because a compressor slider can be manufactured at lower cost by adopting the method for manufacturing a compressor slider according to the present invention, as opposed to a method for manufacturing a compressor slider in which "a slider preform for a compressor is manufactured by thixocasting, and the slider preform is machine finished with ultrafine precision to obtain the final slider."

## Claims

1. A method for manufacturing a compressor slider, comprising:
a slider preform manufacturing step for manufacturing, using a prescribed mold, an iron slider preform (25) in which at least one property selected from a tensile strength and a tensile modulus of elasticity is greater than that of flake graphite cast iron;
a resin coating step for partially or completely forming a resin coating layer (25a) on the slider preform without machining all or a part of the slider preform; and
a machining step for machining only the resin coating layer to obtain a completed slider (17, 23, 24, 26, 39, 60).

2. The method for manufacturing a compressor slider as recited in Claim 1, wherein the slider preform is manufactured by thixocasting (semi-molten molding) or rheocasting (semisolid molding) in the slider preform manufacturing step.

3. The method for manufacturing a compressor slider as recited in Claim 1, wherein the slider preform is composed of pearlitic malleable cast iron, spheroidal graphite cast iron, or spheroidal carbide cast iron in the slider preform manufacturing step.

4. The method for manufacturing a compressor slider as recited in Claim 3, wherein the slider preform is manufactured by a lost-wax process or casting in the slider preform manufacturing step.

5. The method for manufacturing a compressor slider as recited in any of Claims 1 through 4, further comprising a surface treatment step for roughening the surface of the slider preform.

6. The method for manufacturing a compressor slider as recited in Claim 5, wherein the surface of the slider preform is roughened by chemical conversion treatment or blast treatment in the surface treatment step.

7. The method for manufacturing a compressor slider as recited in any of Claims 1 through 6, wherein a resin coating layer is formed on the slider preform by spray coating or injection molding in the resin coating step.

8. The method for manufacturing a compressor slider as recited in Claim 7, wherein a resin coating layer is formed on the slider preform by spray coating while the slider preform is heated and rotated in the resin coating step.

9. The method for manufacturing a compressor slider as recited in any of Claims 1 through 8, wherein the resin coating layer is disposed so that the thickness of the resin coating layer is a value obtained by adding the machining allowance to the profile precision of the slider preform in the resin coating step.

10. The method for manufacturing a compressor slider as recited in any of Claims 1 through 9, wherein the resin coating layer is composed of engineering plastic.

11. The method for manufacturing a compressor slider as recited in any of Claims 1 through 10, wherein the resin coating layer has a hardness of 0.1 GPa or greater as measured by nanoindentation.

12. The method for manufacturing a compressor slider as recited in any of Claims 1 through 11, wherein the slider preform has a flat plate portion (24a, 26a) and a thin scroll portion (24b, 26b) that extends from a first plate surface, which is a plate surface on one side of the flat plate portion, toward a direction perpendicular to the first plate surface while a thin scroll shape is maintained.

13. The method for manufacturing a compressor slider as recited in Claim 12, wherein a resin coating layer is formed only on the first plate surface and the thin scroll portion in the resin coating step.

14. The method for manufacturing a compressor slider as recited in Claim 12, wherein a resin coating layer is formed only on a curved surface that intersects the first plate surface in the thin scroll portion in the resin coating step.

15. The method for manufacturing a compressor slider as recited in Claim 12, wherein the slider preform further comprises a groove portion (26d) provided to the flat plate portion, and a resin coating layer is formed on at least the groove portion in the resin coating step.

16. The method for manufacturing a compressor slider as recited in Claim 12, wherein the slider preform further comprises a cylindrical portion (26c) that cylindrically extends from a second plate surface, which is a plate surface on the reverse side of the first plate surface, toward the direction perpendicular to the second plate surface; and
a resin coating layer is formed on at least the inner surface of the cylindrical portion in the resin coating step.

17. The method for manufacturing a compressor slider as recited in any of Claims 12 through 16, wherein the thin scroll portion has a tooth section that presents a trapezoidal shape when the tooth is cut along a plane that includes the centerline and is orthogonal to the first plate surface.

18. The method for manufacturing a compressor slider as recited in any of Claims 12 through 17, wherein at least one area selected from an angle portion (25b) and a base portion (25c) of the thin scroll portion has a rounded shape.

19. A compressor comprising a slider manufactured by the method for manufacturing a compressor slider as recited in any of Claims 1 through 18.

20. The compressor as recited in Claim 19, wherein carbon dioxide is compressed.
